**Europäisches Patentamt**

**European Patent Office**

**Office européen des brevets**

(19)

(11) Publication number : **0 436 602 B1**

## EUROPEAN PATENT SPECIFICATION

(12)

(45) Date of publication of patent specification :
26.08.92 Bulletin 92/35

(51) Int. Cl.⁵ : **C25C 7/00,** C25C 1/20

(21) Application number : **89910862.5**

(22) Date of filing : **26.09.89**

(86) International application number :
**PCT/EP89/01124**

(87) International publication number :
**WO 90/03456 05.04.90 Gazette 90/08**

(54) **METAL-RECOVERY DEVICE.**

(30) Priority : **27.09.88 DE 3832674**

(43) Date of publication of application :
**17.07.91 Bulletin 91/29**

(45) Publication of the grant of the patent :
**26.08.92 Bulletin 92/35**

(84) Designated Contracting States :
**DE FR GB IT**

(56) References cited :
**FR-A- 2 141 893**
**GB-A- 2 092 178**
**US-A- 2 099 873**

(73) Proprietor : **KODAK AKTIENGESELLSCHAFT**
**Postfach 60 03 45**
**W-7000 Stuttgart 60 (DE)**
(84) **DE**
Proprietor : **EASTMAN KODAK COMPANY**
**343 State Street**
**Rochester, New York 14650-2201 (US)**
(84) **FR GB IT**

(72) Inventor : **SCHEUFLER, Gert**
**Forststr. 22**
**W-7057 Winnenden 3 (DE)**

(74) Representative : **Lewandowsky, Klaus Dipl.-Ing.**
**Kodak Aktiengesellschaft Patentabteilung**
**Postfach 600345**
**W-7000 Stuttgart 60 (DE)**

EP 0 436 602 B1

## Description

The invention relates to a device for electrolytically recovering metal, in particular silver, from a photographic processing solution, said device comprising an anode located in a recovery chamber and a cathode arranged for movement from a first position within the liquid to a second position outside the liquid as well as a scraper for removing metal deposited on said cathode.

US 2,099,873 discloses a machine for electrolytically recovering metal, e. g. from a chromium-containing solution, using a cathode formed of a flexible metal belt. The belt moves around a large drum and a number of deflecting rollers arranged adjacent to the drum. The drum is supported by a shaft extending across the level of the solution and is partly submerged in the chromium-containing solution. For the purpose of recovering metal, the drum is constantly rotated so that the belt cathode moves continuously around the drum and the deflecting rollers. A curved anode arranged eccentrically to the drum axis runs at a small distance to the surface of the drum section submerged in the solution and the belt cathode moving over the drum.

When the belt cathode moving out of the solution leaves the periphery of the drum, it extends in horizontal direction to the first deflecting roller, is then guided downwards and, moving over further deflecting rollers arranged in a separate water tank outside the tank holding the chromium-containing solution returned to the drum.

Due to the fact that the belt cathode is sharply bent while moving over the deflecting rollers, most of the metal having deposited on the flexible belt cathode is released therefrom and collected in the water tank or in a foraminous container nested therein. Any residual particles still adhering to the belt are removed by two scrapers contacting the belt.

The large diameter and the width of the drum are required to obtain a peripheral surface as large as possible because only a portion is submerged in the solution. The belt cathode is dimensioned such that the area covering the submerged peripheral section of the drum is of substantially the same size as said submerged section. As a result, there is always a fairly large deposition surface of the arcuate anode facing the belt cathode contacting the rotating drum.

Due to the above described design features, however, the known metal recovery machine has exceptionally large dimensions. Support and drive mechanism of the amply dimensioned drum as well as arranging and housing the plurality of deflecting rollers for guiding the belt cathode is technically sophisticated and expensive. Moreover, withdrawal of a foraminous container which' is nested in the separate water tank and in which the metal recovered from the belt cathode is collected is very complicated because the device carrying the deflecting rollers is large and heavy and is the first part to be removed from the water tank. If the foraminous container is not used, the water dispersed by metal flakes can, of course, be drained but for regularly cleaning the water tank the device carrying the rollers must also be removed. Also, due to the continuous movement of the belt cathode, the layer of metal which is deposited on the portion of the belt cathode moved through the liquid is very thin.

GB-A-2,092,178 discloses a silver recovery apparatus whose cathode designed as a drum is arranged transversely above a silver-containing solution held in a container. In a first aspect of the invention, the drum is partly immersed in the silver-containing solution for the purpose of electrolytically removing silver therefrom. During electrolytic silver recovery the drum is rotated continously or intermittently, with the portion of the drum surface immersed in the solution receiving a plated deposit of silver. The silver deposit is optically sensed above the liquid level when moved out of the solution. During further movement of the drum, the silver is removed by a scraper permanently contacting the drum surface.

Instead of a drum whose surface is provided with an electrically conductive coating, the cathode may also be designed as an endless belt which is continuously or intermittently moved through the solution.

According to a further aspect of the invention, the silvercontaining solution is pumped upwards to an anode formed as a tray and brought into contact with an electrically conductive surface area of the cathode designed as a drum. In this case, the drum is arranged above the liquid level and not immersed in the liquid.

This known electrolytic silver recovery apparatus has also exceptionally large dimensions. In this case, too, a large diameter and a great width of the cathode designed as a drum is required in order to obtain a large surface area since at least in one case less than half of the surface is immersed in the solution on which the silver is then electrolytically deposited.

It is the object of the present invention to provide a metal recovery device of the generic type which consists of a relatively small and compact apparatus which is uncomplicated in design and the cathode of which shows an optimally sized surface on which a large quantity of metal can be deposited. Moreover, a scraper device and a collecting device for the electrolytically recovered metal are to be designed such that the two devices can jointly be removed from and re-inserted into the recovery apparatus without any difficulty.

According to the present invention, the object is attained in that the cathode is designed as a hollow cylindrical circular cathode which in its first position surrounds a vertically arranged cylindrical anode and which in its second position is located above the anode and is engaged with said scraper and will remain in engagement therewith until it has returned to its first position.

Further features and advantages will be apparent from the subclaims and from the description of an embodiment of the invention shown in the drawing in a schematic representation.

Fig. 1 shows a longitudinal cross-section of the silver recovery device according to the invention and

Fig. 2 shows a cross-section along the line II-II of the silver recovery device according to Fig. 1.

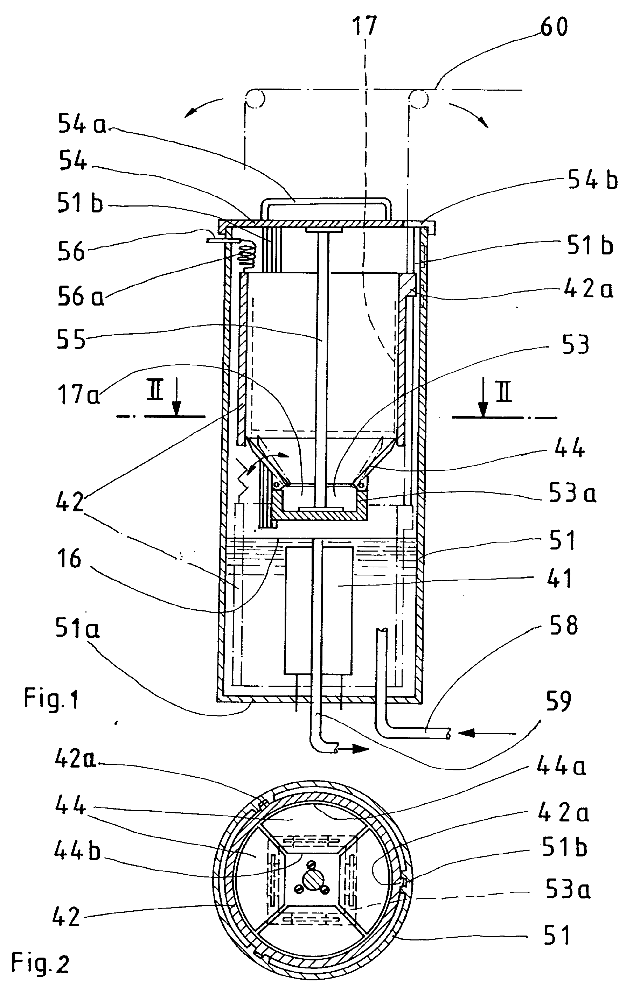

Figs. 1 and 2 show a silver recovery device in a schematic representation. The device consists of a recovery chamber 51 which in the embodiment is designed as a vertically extending hollow cylinder.

In bottom 51a of the recovery chamber 51 there are provided a feed pipe 58 and a drain pipe 59 which rises from the center of the bottom 51a. Both pipes are connected to a film processing unit by means of a hose line. The liquid level depends on the height of the drain pipe 59 and amounts to about one third of the height of the recovery chamber 51.

Cathode 42 is designed as a hollow-cylindrical circular cathode and surrounds a cylindrical anode 41 which is arranged in an upright position in the center of bottom 51a to which it is electrically connected. Anode 41 terminates a small distance below the liquid level. The circular cathode 42 is suspended by two ropes 60 which are passed through two slots 54b formed at the edge of cover 54 and about two deflecting rollers to a winch. Moreover, in the area of its upper edge extending beyond the liquid level the circular cathode 42 is provided with three projections 42a which are uniformly spaced along its periphery and engage with three vertically extending guide grooves 51b which start above the liquid level and are formed at the inner surface of the hollow-cylindrical recovery chamber 51. In this manner, the circular cathode 42 is held and guided for sliding movement in vertical direction when it is lifted from the solution 16 and subsequently lowered into said solution either manually or automatically. Below cover 54, a connecting terminal 56 is plugged through the wall of the recovery chamber 51 for connecting to the circular cathode 42 a helically shaped electric line 56a.

The collecting bin for the metallic silver scraped off is denoted 53. It is mounted above the level of the solution by a downwardly extending mounting bar 55 arranged on cover 54 and consists of a box open at the top and having a substantially square base on the four side walls 53a of which a scraper 44 each designed as a conical segment is pivotally mounted. The inner edges 44b of the scrapers 44 facing towards the center extend rectilinearly and substantially parallel to the side walls 53a of the bin.

The withdrawal of the circular cathode 42 from its operative position within the solution to its inoperative position shown in full lines (Fig. 1) and its immediate re-insertion can be effected under the control of a timing circuit. While circular cathode 42 is being moved upwards, the scrapers 44 are in a retracted position shown in dash-dotted lines. Before the circular cathode 42 is again lowered into the solution, the scrapers are pivoted outwardly by means not shown. Since the scrapers 44 are hinged such that they extend obliquely upwards, they form a funnel and, when in their operative position, are brought into engagement with the silver carrying inner wall of the circular cathode 42 by means of their circular scraping edges 44a, the silver deposit 17 being scraped off during lowering of the circular cathode 42 and dropping into bin 53.

In order to remove the silver scraped off, the two deflecting rollers of the rope arrangement 60 are pivoted aside. Subsequently, the cover 54 together with the collecting bin 53 provided with the scraper 44 is lifted by means of a grip 54a and the bin emptied.

The inner wall of circular cathode 42 facing the anode has a rough surface treated with a sandblast or sand paper. As long as the silver deposited on said rough cathode surface is moist, it can be removed without any problem by the scraper 44 during the lowering movement of the circular cathode 42.

## Claims

1. Device for electrolytically recovering metal, in particular silver, from a photographic processing solution, said device comprising an anode (41) located in a recovery chamber (51) and a cathode (42) arranged for movement from a first position within the liquid to a second position outside the liquid as well as a scraper (44) for removing metal deposited on said cathode (42), **characterized** in that the cathode is designed as a hollow-cylindrical circular cathode (42) which in its first position surrounds a vertically arranged cylindrical anode (41) and which in its second position is located above the anode (41) and is engaged with said scraper (44) and will remain in engagement therewith until it has returned to its first position.

2. Device according to claim 1, characterized in that the recovery chamber (51) is designed as a hollow cylinder and in that the collecting bin (53) for the scraped-off metal (17a) is held above the level of the solution by a holding bar (55), said holding bar being arranged on the cover (54) of the recovery chamber (51) and extending downwardly.

3. Device according to claim 2, characterized in that the collecting bin (53) consists of a box open at the top and having a substantially square base, a scraper (44) designed as a conical segment being mounted for pivotable or shiftable movement on each of the four side walls (53a) of said bin.

4. Device according to claim 3, characterized in that the inner edges (44b) of the scrapers (44) which face towards the center extend rectilinearly and substantially parallel to the side walls (53a) of the tank, in that the scrapers (44) are hingedly connected in an upwardly inclined position such that they form a funnel and, by means of their circular scraping edges (44a), are brought into engagement with the inner wall of the circular cathode (42) moved out of the solution (16).

5. Device according to claim 1, characterized in that the inner wall of the circular cathode (42) has been roughened by a sand blast or by pressing sand paper on said inner wall surface.

**Patentansprüche**

1. Vorrichtung zur elektrolytischen Metallrückgewinnung, insbesondere Silberrückgewinnung, aus einer photographischen Behandlungsflüssigkeit, mit einer in einer Rückgewinnungskammer (51) befindlichen Anode (41) und einer Kathode (42), die aus einer ersten Stellung innerhalb der Flüssigkeit in eine zweite Stellung außerhalb der Flüssigket bewegbar ist, sowie mit einem Schaber (44) zum Entfernen von auf der Kathode (42) abgelagertem Metall, **dadurch gekennzeichnet**, daß die Kathode als eine hohlzylinderförmige Rundkathode (42) ausgebildet ist, die in ihrer ersten Stellung eine senkrecht angeordnete zylindrische Anode (41) umgibt und in ihrer zweiten Stellung oberhalb der Anode (41) angeordnet ist und mit dem Schaber (44) in Eingriff gelangt und solange in Eingriff bleibt, bis sie in ihre erste Stellung zurückgekehrt ist.

2. Vorrichtung nach Anspruch 1, dadurch gekennzeichnet, daß die Rückgewinnungskammer (51) als Hohlzylinder ausgebildet ist und daß der Auffangbehälter (53) für die Aufnahme von abgeschabtem Metall (17a) von einer an der Abdeckung (54) der Rückgewinnungskammer (51) angeordneten und nach unten ragenden Haltestange (55) oberhalb des Flüssigkeitsspiegels gehalten ist.

3. Vorrichtung nach Anspruch 2, dadurch gekennzeichnet, daß der Auffangbehälter (53) aus einem oben offenen Kasten mit im wsentlichen quadratischer Grundfläche besteht, auf dessen vier Seitenwänden (53a) jeweils ein als Kegelsegment ausgebildeter Schaber (44) schwenkbar oder verschiebbar gelagert ist.

4. Vorrichtung nach Anspruch 3, dadurch gekennzeichnet, daß die dem Zentrum zugekehrten Innenkanten (44b) der Schabers (44) geradlinig und im wesentlichen parallel zu den Behälterseitenwänden (53a) verlaufen, daß die Schaber (44) derart schräg nach oben ragend angelenkt sind, daß sie einen Trichter bilden und mittels ihrer kreisbogenförmigen Schabekanten (44a) mit der Innenwandung der aus der Flüssigkeit (16) herausbewegten Rundkathode (42) in Eingriff gelangen.

5. Vorrichtung nach Anspruch 1, dadurch gekennzeichnet, daß die Innenfläche der Rundkathode (42) durch Sandstrahlen oder durch Pressung mit Sandpapier aufgerauht ist.

**Revendications**

1 - Dispositif pour la récupération de métaux par électrolyse, en particulier l'argent, d'une solution de traitement photographique, ledit dispositif comprenant une anode (41) disposée dans une chambre de récupération (51) et une cathode (42) disposée pour être déplacée d'une première position dans le liquide vers une seconde position hors du liquide ainsi qu'un racleur (44) pour enlever le métal déposé sur la cathode (42) caractérisé en ce que la cathode (42) est sous forme d'une cathode circulaire à cylindre creux qui, dans sa première position entoure une anode cylindrique (42) disposée verticalement et qui, dans sa seconde position est disposée au-dessus de l'anode (41) et est en engagement avec le racleur (44) et ce jusqu'à ce qu'elle soit retournée dans sa première position.

2 - Dispositif selon la revendication 1 caractérisé en ce que la chambre de récupération (51) est sous forme d'un cylindre creux et en ce que le réservoir de récupération (53) du métal raclé de la cathode (17a) est maintenu au-dessus du niveau de la solution au moyen d'une tige de maintien (55), ladite tige de maintien étant disposée sur le couvercle (54) de la chambre de récupération (51) et s'étendant vers le bas.

3 - Dispositif selon la revendication 2, caractérisé en ce que le réservoir de récupération (53) est constitué d'une boîte ouverte en sa partie supérieure et ayant une base sensiblement carré, un racleur (44) en forme de segment conique étant monté en mouvement de pivot ou de translation sur chacun des quatre côtés (53a) du réservoir.

4 - Dispositif selon la revendication 3 caractérisé en ce que les bords internes (44b) des racleurs (44) en regards du centre, s'étendent de façon rectiligne et sensiblement parallèle aux bords latéraux (53a) du récipient, et en ce que les racleurs (44) sont suspendus dans une position inclinée vers le haut de sorte qu'ils forment un tunnel et, au moyen de leurs bords racleurs circulaires (44a) sont amenés en engagement avec la paroi interne de la cathode circulaire (42) laquelle est déplacée hors de la solution.

**5** - Dispositif selon la revendication 1 caractérisé en ce que la paroi interne de la cathode circulaire (42) à été dépolie par sablage ou en la frottant avec du papier de verre.

17    60

54 a
54
51 b
56
56 a

54 b
51 b
42 a

55

17 a    II    II    53

42    44
53 a
51
41

16

51 a    58

59

Fig.1

42 a    44 a
44    42 a
44 b    51 b
53 a
42    51

Fig.2